# EUROPÄISCHE PATENTSCHRIFT

(11) **EP 0 591 306 B1**
(45) Veröffentlichungstag und Bekanntmachung des Hinweises auf die Patenterteilung: **25.01.1995**
(21) Anmeldenummer: 92912850.2
(22) Anmeldetag: 25.06.1992
(51) Int. Cl.: B01D 37/02

(54) **FILTERVERFAHREN UND FILTERVORRICHTUNG ZUM FILTERN VON FLÜSSIGKEITEN**
PROCESS AND DEVICE FOR FILTERING LIQUIDS
PROCEDE ET DISPOSITIF POUR LA FILTRATION DE LIQUIDES

(30) Priorität: 25.06.1991 DE 4120971
(43) Veröffentlichungstag der Anmeldung: 13.04.1994
(73) Patentinhaber: HANDTMANN, Thomas, D-88400 Biberach (DE)
(72) Erfinder: HANDTMANN, Thomas, D-88400 Biberach (DE)
(74) Vertreter: Grünecker, Kinkeldey, Stockmair & Schwanhäusser Anwaltssozietät
(86) Internationale Anmeldenummer: EP9201436
(87) Internationale Veröffentlichungsnummer: WO9300146

(56) Entgegenhaltungen:
- BE-A- 426 545
- DE-A- 2 546 263
- DE-U- 8 403 122
- DE-U- 8 438 393
- GB-A- 2 201 355

## Beschreibung

Die Erfindung betrifft ein Filterverfahren zum Filtern von Flüssigkeiten, insbesondere Getränken, und eine Filtervorrichtung zum Durchführen dieses Verfahrens mit den Merkmalen des Oberbegriffs des Anspruchs 9.

Ein solches Filterverfahren ist der der Praxis bekannt. Es wird insbesondere zur sterilen Filtration in der Getränkeindustrie verwendet. Bei der Filtration von Bier können Hefezellen und Bakterien zurückgehalten werden, ohne daß der Durchfluß von Feinsubstanzen, die für den Geschmack verantwortlich sind, behindert wird. Ein solches Filterverfahren und eine solche Filtervorrichtung sind z.B. aus der EP-A-368 076 und aus der DE-U-8438393.3 bekannt.

Bei diesem Verfahren werden die Filter in einer Station außerhalb der Filterstation hergestellt. Dann wird jeweils ein Filter zwischen zwei in der Filterstation vorliegenden Filterhalterungen eingesetzt. Die Filterschalen mit den Filtern werden in der Filterstation übereinandergestapelt. Nachteilig an diesem Verfahren ist, daß die Filter mit einer hohen Eigenstabilität ausgebildet werden müssen, um den Transport der Filter in die Filterschalen zu ermöglichen. Hierzu wird dem Filterrohmaterial ein Bindemittel beigemischt. Da ein solches Bindemittel zuckerhaltig ist, hat dessen Verwendung den Nachteil, daß Zucker in die zu filtrierende Flüssigkeit gelangen kann. Dies kann weitgehend dadurch verhindert werden, daß die Filterstation vor Beginn des Filtervorgangs mit Wasser durchspült wird, um das Bindemittel aus den Filtern herauszulösen. Dabei können jedoch die Filter in ihrer Höhe um bis ca. 1/3 schrumpfen. Durch diese Schrumpfung treten Dichtungsprobleme in der Filtervorrichtung auf, die nur durch den Einsatz spezieller Dichtungen zum Abdichten der Filter in der Filterstation gelöst werden können. Hierdurch wird die Vorrichtung aufwendig und teuer.

Aus der DE-A-39 00 934 ist eine Filtervorrichtung bekannt, in der Filter, die ohne Bindemittel hergestellt werden, eingesetzt werden. Die Filter werden in der Filterstation selbst durch Anschwemmen von Filterhilfsmitteln hergestellt. Das Filterhilfsmittel wird vor Beginn des Filtrationsvorganges über eine gemeinsame Zuleitung auf die einzelnen turmartig übereinander angeordneten Filterhalter angeschwemmt, so daß dort die einzelnen Filter aufgebaut werden. Nach Beendigung des Filtervorganges werden die Filter mittels eines geeigneten Spülmittels aus der Vorrichtung herausgespült.

An diesem Verfahren ist nachteilig, daß der Aufbau der Filtervorrichtung groß und aufwendig ist, da das Filterhilfsmittel über eine gemeinsame Leitung zur gemeinsamen Herstellung aller Filter zugeführt wird. Deshalb muß eine Zuleitung mit genügend großem Durchmesser vorgesehen sein. Zudem ist der Aufbau der einzelnen Filter bzw. deren Gleichmäßigkeit nicht unabhängig und exact kontrollier- und gegebenenfalls veränderbar. Durch das Anschwemmen über die gemeinsame Leitung und das Verteilen des Filterhilfsmittels auf alle Filterträger können die Filter in ihrem Aufbau ungleichmäßig werden. Da die Filter nicht gepreßt werden, werden solche Ungleichmäßigkeiten auch nicht ausgeglichen.

Im Hinblick auf diesen Stand der Technik liegt der Erfindung die Aufgabe zugrunde, ein verbessertes und gleichzeitig vereinfachtes Filterverfahren und eine Filtervorrichtung zum Filtern von Flüssigkeiten zu schaffen, bei dem die Qualität des Filtrats nicht negativ beeinträchtigt wird.

Diese Aufgabe wird erfindungsgemäß durch ein Filterverfahren mit den Merkmalen des Anspruchs 1 und eine Filtervorrichtung mit den Merkmalen des Anspruchs 9 gelöst.

Da das Herstellen jedes Filters durch Anschwemmung des Filterhilfsmittels auf einen Filterträger in einer Anschwemmstation erfolgt, also außerhalb der Filterstation, kann die Herstellung eines jeden Filters einzeln überwacht und individuell gesteuert werden. Dadurch wird die Gleichmäßigkeit der Filter gewährleistet. Da die Filterherstellung in einer Anschwemmstation erfolgt, ist auch ein einfacher Aufbau der Filterstation möglich, da dort dann kein zusätzlicher großer Kanal zum Anschwemmen des Filterhilfsmittels vorgesehen werden muß. Die Filtervorrichtung muß somit nur auf den Filtervorgang ausgelegt sein und kann dementsprechend optimal konstruiert werden. Mit dem Aufschwemmverfahren einzelner Filter außerhalb der Filterstation können sowohl einfache Filter als auch mehrschichtige Filter, die in ihrem Aufbau asymmetrisch sind, zuverlässig und kontrollierbar hergestellt werden. Zur Überwachung kann eine Sichtkontrolleinheit angebracht sein. Nach Beendigung des Anschwemmungsvorgangs kann das Filter zum Trocknen auf dem Filterträger in der Anschwemmstation verbleiben.

Da der Filterträger zusammen mit dem darauf hergestellten Filter in die Filterstation eingebracht wird, muß das Filter keine Eigenstabilität zum Transport des Filters in eine Filtervorrichtung aufweisen. Daher ist es nicht notwendig, zur Herstellung des Filters ein Bindemittel zu verwenden. Es entfallen ferner die oben erwähnten Probleme, die bezüglich der Dichtungen auftreten, wenn die Filter aufgrund des Ausspülens des Bindemittels in ihrer Höhe schrumpfen. Die Verwendung von Dichtungsringen wird nämlich völlig überflüssig, da das Filterhilfsmittel direkt auf die Filterträger aufgeschwemmt wird und somit das Filter und der Filterträger dicht miteinander verbunden sind. Da die einzelnen Filterträger mit den sich darauf befindenden Filtern in der Filtervorrichtung direkt aufeinandergestapelt werden, dichtet jeweils der Filterträger, der auf ein sich in der Filterstation befindenden Filterträger mit Filter aufgesetzt wird, das darunterliegende Filter durch das Gegeneinanderpressen der Filter mit Filterträgern vollständig ab. Abhängig von dem Filtermaterial kann das Zusammenpressen durch den Filterträger, bei besonders weichem Filtermaterial, oder durch das Filtermaterial selbst bei festem Filtermaterial begrenzt werden. Da keine Inhomogenitäten auftreten, erfolgt das Verpressen gleichmäßig. Durch das Anpressen wird das Filtermaterial fixiert.

Da das Filter keine Eigenstabilität zum Transport aufweisen muß, können die Filter mit einem größeren Durchmesser hergestellt werden als im Stand der Technik. Dies ist vorteilhaft, wenn die Filtervorrichtung aus Platzgründen nicht hoch sondern eher breiter gebaut werden soll.

Da nach Beendigung des Filtervorganges die Filterträger mit den Filtern nacheinander der Filterstation entnommen werden und dann die Filter in einer Entsorgungsstation aus den Filterträgern zur Entsorgung herausgelöst werden, ist auch eine einfache Reinigung der Vorrichtung möglich. Der Filter muß nur aus jedem einzelnen Filterträger entfernt werden. Es müssen in der Filterstation selbst keine Möglichkeiten zu einer Reinigung vorgesehen sein. Es sind auch keine zusätzlichen losen Teile in der Filtervorrichtung vorhanden, die noch zusätzlich individuell gereinigt werden müssen. Die Filter können von ihrem Filterträger jeweils durch herausklopfen, schieben oder schütteln entfernt und in einer Entsorgungsstation entsorgt werden.Die Entsorgungsstation muß nicht unbedingt am Ort der Filtervorrichtung untergebracht sein. Es kann auch für mehrere Benutzer, z. B. Hersteller der Filterträger, vorgesehen sein.

Gemäß einer vorteilhaften Weiterbildung der Erfindung ist in der Anschwemmstation eine Austrittsöffnung der Anschwemmleitung oberhalb des Filterträgers angeordnet. Günstigerweise befindet sich die Austrittsöffnung auf der Mittelachse durch den Filterträger. Hierdurch wird ein gleichmäßiges Anschwemmen des Filterhilfsmittels auf den Filterträger gewährleistet. Die gleichmäßige Verteilung des Filtermaterials kann dadurch verbessert werden, daß oberhalb des Filterträgers und unterhalb der Austrittsöffnung der Anschwemmleitung ein Verteilerelement zum Verteilen des Filterhilfsmittels auf den Filterträger angeordnet ist. Als Verteilerelement kann ein nach oben gewölbtes Element, z.B. ein gewölbtes Blech verwendet werden. Auch kann das Verteilerelement eine siebartige Platte umfassen auf der sich das angeschwemmte Material verteilt und über die Löcher in der Platte gleichmäßig auf den Filterträger gelangt.

Gemäß einem anderen vorteilhaften Ausführungsbeispiel der Erfindung sind an der Anschwemmleitung Austrittsöffnungen vorgesehen, die oberhalb eines Randes des Filterträgers radial angeordnet sind. Es ist vorteilhaft, diese Austrittsöffnungen mit radial angeordneten Düsen zu versehen. Ferner kann es vorteilhaft sein, die Austrittsöffnungen so mit Düsen zu versehen, daß die Düsen mit dem Radius einen Neigungswinkel von 20° bis 70° aufweisen. Das Filterhilfsmittel wird dann unter Druck auf den Filterträger aufgeblasen, wodurch das Filterhilfsmittel gleichmäßig auf dem Filterträger verteilt wird und dichtend mit dem Filterträger abschließt. Eine noch größere Gleichmäßigkeit des Filtermateerials auf dem Filter kann dadurch erzielt werden, daß ein Teil der Düsen den Neigungwinkel mit dem Radius in Uhrzeigerrichtung, ein anderer Teil der Düsen den Neigungswinkel mit dem Radius in Gegenuhrzeigerrichtung bilden. Dabei können die unterschiedlich orientierten Düsen abwechselnd hintereinander angeordnet werden. Auch können jeweils zwei verschieden orientierte Düsen an etwa der gleichen Stelle übereinander angeordnet werden oder an einer Austrittsöffnung jeweils einteilig ausgebildet werden.

Das Filterhilfsmittel kann aus Kieselgur bestehen. Es kann ferner, um das Anschwemmen zu erleichtern, Wasser enthalten. Ferner kann es günstig sein, daß das Filterhilfsmittel Perlite oder Fasern aus Kunststoff oder Cellulose enthält. Der Anteil solcher Fasern kann typischerweise 5 bis 20 % des Filterhilfsmittelmaterials betragen.

Auch kann es vorteilhaft sein, wenn in der Anschwemmstation eine Stempelvorrichtung zum Pressen des auf den Filterträger angeschwemmten Filterhilfsmittels angeordnet ist. Durch das Pressen kann eine noch gleichmäßigere Herstellung des Filter gewährleistet werden.

Auch kann es vorteilhaft sein, wenn mehrere Anschwemmstationen vorgesehen sind, da dann das Herstellen und Erneuern der Filter schneller erfolgt. Es kann dann auch nur eine Anschwemmleitung mit mehreren Austrittsöffnungen in den jeweiligen Anschwemmstationen ausgebildet sein. Günstigerweise können auch mehrere Filterstationen vorgesehen sein. Dann kann z.B. ein Teil der Filterstationen mit neuen Filtern bestückt werden, während in den anderen Filterstationen der Filtervorgang durchgeführt wird. Zur gleichen Zeit können in den verschiedenen Anschwemmstationen Filter hergestellt werden, die den nichtarbeitenden Filterstationen zugeführt werden, um dort die verbrauchten Filter zu ersetzen.

Ferner ist es vorteilhaft, wenn die Filterträger als Metallschalen gebildet sind. Auf solchen Metallschalen lassen sich die Filter gleichmäßig herstellen. Die Metallschalen haben eine lange Lebensdauer und sind leicht zu reinigen. Ferner ist durch die gute Wärmeleitfähigkeit dieser Filterträger ein schnelles Aufheizen der Filterstation, das für eine Sterilisation vor Beginn des Filtervorganges notwendig ist, gewährleistet. Die Filterträger können aus rostfreiem Stahl gefertigt sein.

Die Filterträger können einen flachen Boden aufweisen. Ferner kann der Boden der Filterträger eine Schicht aus porösem Gewebe aufweisen. Dieses Gewebe hält die festen Bestandteile in dem Filter zurück und läßt das Filtrat hindurch. Es kann auch vorteilhaft sein, mindestens eine weitere Schicht aus einem porösen Gewebe mit einer von der ersten Schicht verschiedenen Porengröße zu verwenden. Auch kann günstigerweise der Filterträger mindestens einen Siebboden mit Längsschlitzen aufweisen. Dabei ist es besonders vorteilhaft, wenn die Längsschlitze eine Breite von 0,01 bis 0,5 mm aufweisen. Solche Längsschlitze können entweder mit einem Laser in den Boden eingebracht oder durch Ätzen erzeugt werden.

Zudem kann es günstig sein, wenn der Filterträger eine rillenfeldartige Bodenwand aufweist. Diese kann so ausgebildet sein, daß das Rillenfeld Ablaufkanäle unter dem Filter und unter den porösen Geweben bildet. Dies ist dann vorteilhaft, wenn der Filtervorgang von oben nach unten erfolgt und das Filtrat somit unter dem Filter ablaufen soll. Das Rillenfeld kann aber auch so angeordnet sein, daß es Kanäle oberhalb des Filters und oberhalb der auf dem Filter liegenden porösen Gewebe bildet. Dies ist dann vorteilhaft, wenn der Filtervorgang von unten nach oben erfolgt und das Filtrat oberhalb des Filters ablaufen soll.

Gemäß einer vorteilhaften Weiterbildung der Erfindung ist eine Filterträgerzuführeinrichtung vorgesehen, die die einzelnen Filterträger nacheinander der Anschwemmstation zuführt. Dadurch erfolgt das Herstellen der Filter schneller und einfacher, da es weitgehend automatisch erfolgen kann.

Ferner ist es vorteilhaft, wenn eine Transporteinrichtung zur Entnahme des Filterträgers mit dem sich darauf befindenen Filter aus der Anschwemmstation und dessen Transport zum Einbringen in die Filterstation vorgesehen ist. Günstigerweise kann die Transporteinrichtung einen Kran und eine Führungsschiene umfassen. Der Filterträger kann somit einfach und mühelos von der Anschwemmstation direkt in die Filterstation eingebaut werden. Umfaßt der Kran ferner eine Steuerung, mit der die Übergabe des Filterträgers mit dem Filter von der Anschwemmstation zu der Filterstation automatisch erfolgt, so kann das Herstellen der Filter bis zu deren Einbringen in die Filterstation automatisch, ohne zusätzliche Arbeiten einer Bedienungsperson erfolgen.

Ferner kann es vorteilhaft sein, wenn der Kran eine verschließbare Schutzkassette umfaßt, von der der Filterträger mit dem Filter beim Transport von der Anschwemmstation zu der Filterstation eingeschlossen wird. Dadurch läßt sich vermeiden, daß die Filter beim Transport der verschmutzten Atmosphärenluft ausgesetzt sind. Hierdurch wird die Haltbarkeit der Filter erhöht.

Gemäß einer vorteilhaften Weiterbildung der Erfindung können die Filterträger mit den Filtern in der Filterstation so aufeinander angeordnet sein, daß die Filterträger und die Filter symmetrisch zu einer auf der Ebene senkrechtstehenden Achse sind. Dies ist bei der Verwendung von Filterträgern mit konusförmigem Boden von Vorteil, wenn der Boden mit einem solchen Winkel ausgebildet ist, daß Sauerstoff, der in der Filterflüssigkeit enthalten ist, nach oben steigen und somit aus der Vorrichtung entweichen kann.

Gemäß einer weiteren vorteilhaften Ausgestaltung der Erfindung können die Filterträger mit den Filtern in der Filterstation so aufeinander angeordnet sein, daß die Filterträger und die Filterachsen symmetrisch zu einer zu der Ebenen geneigten Achse sind. Dies ist dann günstig, wenn Filterträger mit einem ebenen Boden verwendet werden, da dann aufgrund des durch die Neigung erzeugten Neigungswinkel der Bodenfläche der Sauerstoff aus der Filterflüssigkeit entweichen kann. Günstigerweise ist diese Achse um etwa 30° gegen die Ebene geneigt. Es kann auch vorteilhaft sein, wenn die Filterstation so verschwenkbar ist, daß die Symmetrieachse, die durch die Filterträger und die Filter verläuft, veränderbar ist. Dies ermöglicht eine Auftürmung der Filterträger mit den Filtern entlang der vertikalen Symmetrieachse. Nach dem Auftürmen und Zusammenpressen der Filterträger und Filter kann dann die gesamte Filterstation in den gewünschten Neigungswinkel geschwenkt werden. Es besteht dann auch die Möglichkeit, diesen Neigungswinkel bei Bedarf zu korrigieren.

Es kann auch günstig sein, zwischen den Filtern und den jeweils benachbarten Filterträgern die Gewebeschichten aus porösem Material anzuordnen. Dann müssen die Gewebeschichten nicht direkt an den Filtertellern befestigt sein und können bei Bedarf variiert werden.

Es kann auch vorteilhaft sein, wenn in der Filterstation eine Rückspüleinrichtung vorgesehen ist. Durch das Rückspülen erfolgt eine Zwischenreinigung der Filter, wodurch die Standzeit der Filter in der Filterstation verlängert werden kann. Es kann auch vorteilhaft sein, in der Filterstation mehrere Schlauchleitungen zum Ableiten des Filtrats vorzusehen, da dann das Ableiten des Filtrats und der Filtervorgang besonders gleichmäßig erfolgen.

Gemäß einer weiteren vorteilhaften Weiterbildung der Erfindung kann eine Aushebeeinrichtung zur Entnahme des Filterträgers mit dem zugehörigen Filter und zu dessen Transport zu der Auskippstation vorgesehen sein. Diese Aushebeeinrichtung kann einen Aushebekran umfassen. Dadurch wird dann auch die Entnahme der Filterträger mit den Filtern und das Entfernen der Filter von den Filterträgern automatisch erfolgen. Das Entfernen der Filter kann durch Drücken oder Klopfen, mittels eines Schiebeelments oder durch Schüttelbewegung erfolgen. Ist der Entsorgungsbehälter fahrbar, so kann das verbrauchte Filtermaterial direkt von der Auskippstation entfernt werden.

Gemäß einer weiteren vorteilhaften Weiterbildung der Erfindung kann eine Reinigungsstation vorgesehen sein, in der die Filterträger nach Entnahme der Filter in der Auskippstation gereinigt werden. Die Reinigung kann z.B. durch Druckluft oder Heißdampf erfolgen. Es ist ferner vorteilhaft, wenn eine Reinigungsfördereinrichtung vorgesehen ist, der die Filterträger nach Entnahme des Filters zur Förderung durch die Reinigungsanlage übergeben werden. Erstreckt sich ferner die Filterträgerzuführeinrichtung von der Reinigungsstation bis zu der Anschwemmstation, so können die Filterträger, nachdem von ihnen das Filtermaterial entfernt worden ist und sie die Reinigungsstation durchlaufen haben, direkt wieder der Aufschwemmstation zugeführt werden, in der dann bei Bedarf der nächste Aufschwemmvorgang beginnen kann.

Es ist ferner von Vorteil, wenn eine übergeordnete Steuerelektronik und eine Datenverarbeitungseinheit vorgesehen ist, da dann der gesamte Filtervorgang vom Zuführen der Filterträger zu der Anschwemmstation, dem Anschwemmen des Filterhilfsmittels auf den Filterträgern, dem Einbau der Filter mit Filterträger in die Filterstation, dem Einsetzen des Filtervorganges, der Entnahme der Filterträger und der Filter, dem Reinigen der Filterträger und dem Wiederzuführen zu der Aufschwemmstation vollautomatisch erfolgen kann.

Im folgenden ist die Erfindung anhand der Zeichnung näher beschrieben. Es zeigen:
- Figur 1: eine schematische Darstellung einer erfindungsgemäßen Filtervorrichtung,
- Figur 2: eine schematische Darstellung eines ersten Ausführungsbeispiels eines erfindungsgemäßen Filterträgers und
- Figur 3: eine Schnittdarstellung durch einen erfindungshemäßen Filterträger
- Figur 4 und 5: Detaildarstellung zweier übereinanderliegender Filterträger der in Fig. 3 dargestellten Bauart.

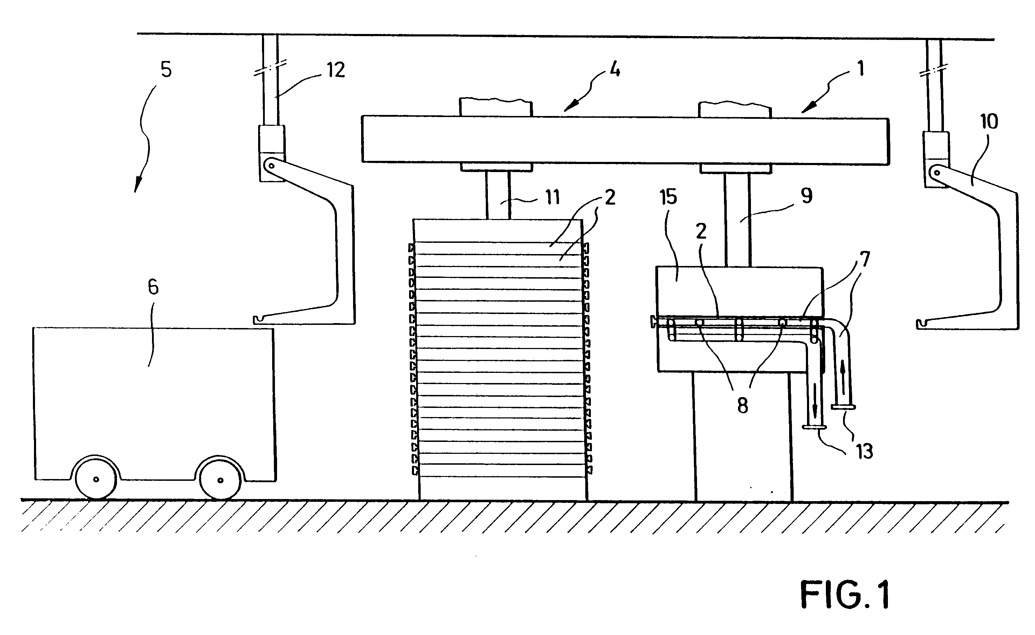

Figur 1 zeigt eine schematische Darstellung einer erfindungsgemäßen Filtervorrichtung zum Filtern von Flüssigkeiten, insbesondere Getränken. In einer Anschwemmstation 1 ist ein Filterträger 2 angeordnet, auf dem ein Filter 3 hergestellt wird. Ferner ist eine Filterstation vorgesehen, in die der Filterträger 2 zusammen mit dem Filter 3 eingesetzt wird. Dort findet der Filtervorgang statt. Nach Beendigung des Filtervorganges werden die Filterträger 2 mit den Filtern 3 aus der Filterstation 4 herausgenommen. In einer Entsorgungsstation 5 werden die Filter 3 von den Filterträgern 2 gelöst und in einen Entsorgungsbehälter 6 aufgenommen.

In der Anschwemmstation 1 ist ein Filterträger 2 in einer Anschwemmvorrichtung 15 angeordnet. Eine Anschwemmleitung 7 verläuft im Inneren der Anschwemmvorrichtung 15 oberhalb des Filterträgers 2 entlang dessen Durchmessers. In der Anschwemmleitung 7 sind über den Umfang des Filterträgers 2 verteilt radiale Öffnungen 8 angeordnet. Über die Anschwemmleitung 7 und die Öffnungen 8 wird ein Filterhilfsmittel auf den Filterträger 2 angeschwemmt. Die Öffnungen 8 können mit Düsen versehen sein, über die das Filterhilfsmittel radial oder unter einem Neigungswinkel von 20 bis 70° mit einem Überdruck auf den Filterträger 2 aufgebracht wird. Durch die Anordnung der Düsen, deren Neigungswinkel zu dem Radius abwechselnd in und entgegen dem Uhrzeigersinn angeordnet sein können, wird ein gleichmäßiges Aufbringen des Filterhilfsmittels auf den Filterträger 2 erzielt. Da das Filterhilfsmittel mit einem Überdruck aufgebracht wird, schließt der Filter 3 dichtend mit dem Filterträger 2 ab. Mittels einer Anpreßvorrichtung 9 wird die Anschwemmvorrichtung 15 während des Anschwemmvorganges gegen den Filterträger 2 gepreßt und nach Beendigung des Anschwemmvorganges wieder abgehoben. Das Filterhilfsmittel umfaßt eine Mischung aus Kieselgur und Wasser; es kann ferner Perlite und zu 5 bis 20 % Fasern aus Kunststoff oder Cellulose umfassen. Ferner ist in der Anschwemmmvorrichtung 15 eine Abflußleitung 13 angeordnet, über die die in dem Filterhilfsmittel enthaltene Flüssigkeit während des Aufbaus des Filters 3 auf den Filterträger 2 abfließen kann. Die in dem Filterhilfsmittel enthaltene Flüssigkeit gelangt durch einen siebartigen Boden des Filterträgers 2 in die Abflußleitung 13.

Nach Herstellung des Filters 3 auf dem Filterträger 2 wird der Filterträger 2 zusammen mit dem Filter 3 aus der Anschwemmstation 1 herausgenommen und in die Filterstation 4 überführt. Der Filterträger 2 wird zusammen mit dem Filter 3 so in die Filterstation eingesetzt, daß die Filterträger 2 mit den Filtern 3 turmartig übereinandergestapelt sind. Die Filterträger 2 mit den Filtern 3 sind in der Filterstation 4 mittels einer Druckeinrichtung 11 aufeinandergepreßt. Die Filterträger 2 mit den Filtern 3 liegen dann so aufeinander, daß sie sich gegenseitig abdichten. Dabei sind Kanäle zum Zuführen der Filterflüssigkeit und Ableitungen für das Filtrat vorgesehen, über die der Filtervorgang erfolgt. Da die Filter 3 auf den Filterträgern 2 direkt hergestellt werden und zusammen mit den Filterträgern 2 in die Filterstation 4 eingesetzt werden, ist zur Herstellung der Filter 3 kein Bindemittel erforderlich, da die Filter 3 nicht einzeln transportiert werden müssen. Dadurch wird vermieden, daß Zucker, der in dem Bindemittel enthalten ist, in das Getränk gelangt. Da die Filter 3 in der Anschwemmstation 1 einzeln hergestellt werden, ist es möglich, die Filter 3 gleichmäßig herzustellen, da die Herstellung jedes Filters 3 einzeln beobachtet, überwacht und gesteuert werden kann. Zur Kontrolle kann an der Anschwemmstation 1 eine Sichtkontrolleinrichtung vorgesehen sein.

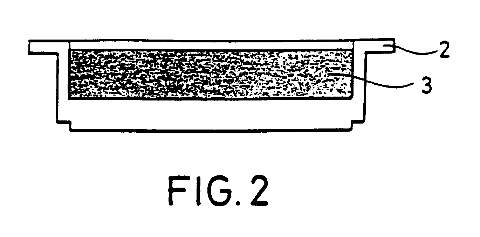

Die Filterträger 2 bestehen bevorzugt aus Metallschalen. Davon ist ein Ausführungsbeispiel mit einem flachen Boden in Figur 2 dargestellt. In der Filterstation 4 sind die Filterträger 2 mit den Filtern 3 so übereinander angeordnet, daß die Filterträger 2 und die Filter 3 achsensymmetrisch zu einer zu der Ebene senkrechtstehenden Achse sind.

Zur Entnahme der Filterträger 2 mit den Filtern 3 aus der Filterstation 4 ist ein Aushebekran 12 vorgesehen. Mit dem Aushebekran werden die Filterträger 2 mit den Filtern 3 aus der Filterstation 4 herausgenommen. Die Filter 3 werden von den Filterträgern 2 in der Entsorgungsstation 5 gelöst. In der Entsorgungsstation 5 ist ein Entsorgungsbehälter 6 vorgesehen, der die verbrauchten Filter 3 aufnimmt und abtransportiert.

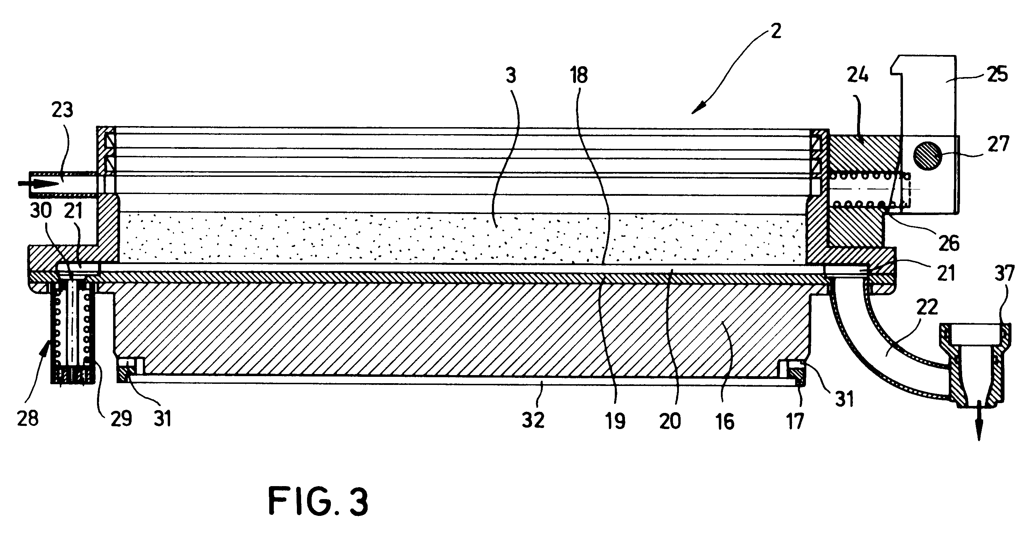

Ein detaillierteres Ausführungsbeispiel für einen erfindungsgemäßen Filterträger wird im folgenden anhand der Figur 3 weiter erläutert.

Der Filterträger 2 besteht aus einem Metall oder Kunststoffträger und ist unten mit einem als Druckstempel ausgebildeten Boden 16 versehen, an dessen Unterkante ein umlaufender Abstreifring 17 angebracht ist. Der Filterträger besitzt in Draufsicht eine kreisrunde Form.

Auf einer Tragplatte 19 verläuft der Filtratsammelkanal 20, der in einen umlaufenden Sammelringkanal 21 mündet. Der Sammelkanal 20 wird nach oben durch einen Filtermittelträger 18 beispielsweise in der Form eines Drahtsiebes begrenzt. Das Filtrat wird über den Filtratablauf 22 entnommen.

Im oberen Bereich des Filterträgers 2 ist ein Unfiltrateinlaufstutzen 23 zu erkennen. In der Zeichnung gegenüberliegend dargestellt findet sich eine Halterung 24 für einen Rasthaken 25, der von einer Feder 26 in die dargestellte Position beaufschlagt ist und um die Achse 27 schwenkbar gelagert ist. In der Zeichnung unterhalb des Unfiltrateinlaufstutzen 23 ist ein Ventil 28 zu erkennen, das einen mittels einer Feder 29 in Schließstellung beaufschlagten Ventilstößel 30 aufweist.

Oberhalb des umlaufenden Abstreifrings 17 sind Zulauföffnungen 31 zu erkennen, die in einen Unfiltratverteilerraum 32 münden.

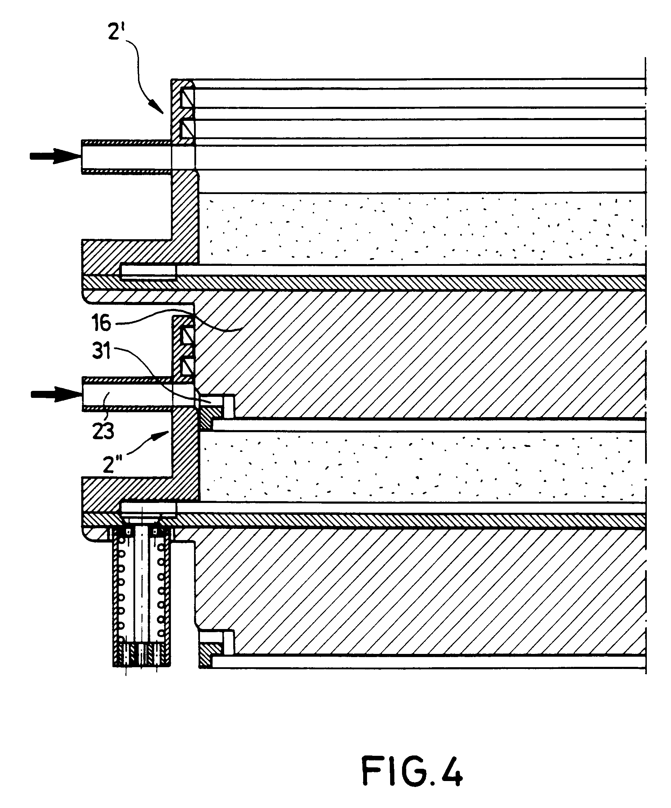

In der Figur 3 und 4 ist dargestellt, wie zwei derartig ausgebildete Filterträger 2 in der Filtervorrichtung aufeinandergestapelt im Bereich der Rasthaken 25 wie im Bereich der Unfiltrateinlaufstutzen 23 zusammenwirken. Man erkennt, daß der Druckstempel 16 des oberen Filterträgers 2' von oben in den darunter liegenden Filtermittelträger 2'' eingreift und in der in Figur 4 dargestellten Position mit der Zulauföffnung 31 fluchtend zum Unfiltrateinlaßstutzen 23 ausgerichtet wird. Über diesen Unfiltrateinlaufstutzen und die Zulauföffnung 31 kann somit das Unfiltrat in den Filterträger 2'' einlaufen.

Auf der gegenüberliegenden Seite sind die Filterträger wie dargestellt durch Eingriff des Rasthakens 25 an einem Vorsprung 33 miteinander verhakt. Es können am Umfang verteilt mehrere Rastnasen und auch mehrere Einund Auslaßstutzen angeordnet werden.

Die umlaufenden Doppeldichtungen 34 und 35 dichten den Druckstempel 16 des oberen Elements gegen die obere Wandung des unteren Elements 2'' ab. Das Unfiltrat wird vom Stutzen 23 über den Ringkanal 36 am Umfang des Elements verteilt und kann dann über die Zulauföffnungen 31 in das Element 2'' einlaufen.

Über den Sammelringkanal 21 kann dann das Filtrat bei 22 entnommen werden.

Die Funktion des Ventils 28 ermöglicht es, den Ausflußquerschnitt aus dem Filterträger während des Filtervorgangs klein zu halten, weil im geschlossenen Zustand (siehe Figur 3) der Ausflußguerschnitt allein durch den Filtratablaufstutzen 22 bestimmt ist. Zu dem Anschwemmvorgang, bei dem mit größeren Wassermengen geabeitet werden muß, kann jedoch das Ventil geöffnet werden, so daß sich ein größerer Durchlaufquerschnitt ergibt. Das Rückschlagventil 28 kann mechanisch entsperrbar sein, was durch einen entsprechenden, nicht dargestellten Druckbolzen beim lagegenauen Einsetzen des Filterträgers 2 in der Anschwemmstation dann bewirkt werden kann. Während des Filtervorgangs stellen diese Ventile 28 statische Dichtungen dar, so daß keine besonderen Spülkammern für diese Ventile erforderlich sind. Bei kleineren Einheiten können die Ventile auch durch Stopfen ersetzt werden. Das Öffnen und Schließen kann manuell oder mit Hilfe von Schrauben erfolgen.

Der ebene Abstreifring 17 zwischen dem Druckstempel 16 (unterer Boden des Filterträgers 2) und der zylindrischen Wand eines darunter liegenden Filterträgers kann zuverlässig verhindern, daß Filterhilfsmittel wie Kieselgur abgeschwemmt wird. Außerdem wird mit dieser Dichtung 17 ein Verklemmen zwischen Wand und Druckstück durch Kieselgurteilchen vermieden.

Die Doppeldichtungen 34 und 35 schaffen zwischen sich einen spülbaren Raum, der über nicht näher dargestellte Spülleitungen anspülbar sein kann.

Zur Zu- und Abführung des Unfiltrats können dem Unfiltrateinlauf 23 und an dem Filtratablauf 22 Kanalaugen 37, wie in Figur 3 nur am Filtratablauf dargestellt, ausgebildet sein. Diese Kanalaugen bilden beim übereinander Stapeln mehrer Filterträger einen durchgehenden Zulauf- bzw. Ablaufkanal.

Das Verrasten der einzelnen Filterträger 2 bringt den Vorteil mit sich, daß man bestimmte Filterträger auch in einem übereinander gestapelten Filterträgerturm entnehmen kann, in dem man mit einer geeigneten Hubvorrichtung die oberen Filterträger anhebt, wobei so viele Filterträger mitgenommen werden, wie deren Rastnasen im Eingriff sind. Bei dem herauszunehmenden Filterträger kann man dann durch Entrasten mit dem oberen und durch Lösen der Rastverbindung mit dem unteren Element loslösen und somit separat entnommen werden. Damit ist auch ein Durchmustern der Elemente von oben nach unten und umgekehrt möglich, ohne daß eine Zwischenablage für die Elemente geschaffen werden muß, weil man sich so zu jedem Element freien Einblick verschaffen kann, in dem man die darüber liegenden miteinander gekoppelten Elemente anhebt.

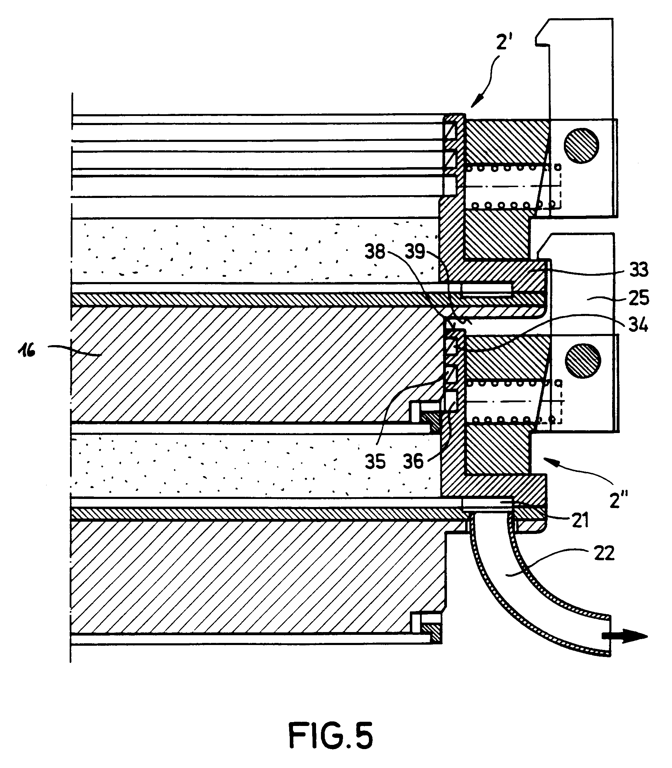

Wie man erkennt, besteht zwischen der Oberkante 38 und dem gegenüber liegenden Anschlag 39 eines darüber liegenden Element in dem in den Figuren 4 und 5 dargestellten Zustand ein Abstand. Um diesen Abstand können die Filterelemente aufeinander zu gepreßt werden, wobei der Druckstempel 16 eines darüber liegenden Elements den darunter liegenden Filterkuchen gleichmäßig verpreßt.

Die Elemente können zusammen mit einer Druckplatte (für den obersten Filterkuchen) zu Paketen zusammengespannt werden. Bis zu einem Durchmesser von 800 mm können die Pakete so auf Europaletten versandt werden. Dies ermöglicht auch die zentrale Anschwemmung mit neuen Filterhilfsstoffen für mehrere Braustätten und ebenso die gemeinsame Entsorgung bzw. Wiederaufarbeitung der Filter. Verpackungsmaterial ist dann nicht erforderlich.

Im folgenden wird das erfindungsgemäße Verfahren erläutert. Ein Filterträger 2 wird mittels einer nicht gezeigten Filterträgerzuführeinrichtung der Anschwemmstation 1 zugeführt. Dort wird der Filterträger 2 unterhalb der Anschwemmleitung 7 angeordnet. Über die Anschwemmleitung 7 wird ein Filterhilfsmittel mit einem Überdruck zugeführt und über an Austrittsöffnungen 8 angeordneten Düsen gleichmäßig auf dem Filterträger 2 verteilt. Das in dem Filterhilfsmittel enthaltene Wasser läuft über die Abflußleitung 13 ab. Aufgrund des starken Druckabfalls beim Austreten des Filterhilfsmittels aus den Düsen entsteht ein Filter 3 auf dem Filterträger 2, das dichtend mit dem Filterträger 2 abschließt. Das Ventil 28 ist dabei geöffnet.

Danach wird der Filterträger 2 mit dem Filter 3 mittels des Kranes 10 der Anschwemmstation entnommen und in die Filterstation 4 eingesetzt. Dort werden die Filterträger 2 mit den Filtern 3 turmartig aufeinandergestapelt und mittels einer Druckeinrichtung 11 aneinandergepreßt.

Das Anpressen kann auch von unten hydraulisch erfolgen, wobei hier eine reine Wasserhydraulik eingesetzt werden kann, was aus Umweltschutzgründen vorteilhaft ist. Es erfolgt nun die Zuleitung des Unfiltrats und die Ableitung des Filtrats wie anhand der Figuren 3 und 4 beschrieben.

Nach Beendigung des Filtrationsvorgangs wird die Druckeinrichtung 11 geöffnet.

Die Filterträger 2 werden mit den Filtern 3 mittels eines Aushebekranes 12 entnommen und einer Entsorgungsstation 5 zugeführt. Dort werden die Filter 3 von den Filterträgern 2 gelöst. Das verbrauchte Filtermaterial wird dem Entsorgungsbehälter 6 übergeben. Danach werden die Filterträger 2 einer in der Zeichnung nicht dargestellten Reinigungsstation zugeführt. Dort werden sie mittels eines Dampfstrahles gereinigt und der Filterträgerzuführeinrichtung übergeben, mittels der die Filterträger 2 wieder der Anschwemmstation zugeführt werden.

Die Anschwemmstation muß nicht notwendigerweise am selben Ort wie die Filtervorrichtung vorhanden sein. Es ist auch denkbar, das Anschwemmen zentral für mehrere Benutzer durchzuführen und dann dort auch eine gemeinsame Entsorgung bzw. Wiederaufarbeitung der Filterhilfsstoffe vorzunehmen.

## Patentansprüche

1. Filterverfahren zum Filtern von Flüssigkeiten, insbesondere Getränken, bei dem Filter (3) durch Anschwemmung eines Filterhilfsmittels auf Filterträgern (2) in einer Anschwemmstation (1) hergestellt werden, bei dem dann die Filter (3) mit den Filterträgern (2) der Anschwemmstation (1) entnommen und in eine Filterstation (4) eingebracht, dort turmartig übereinandergestapelt und miteinander verpreßt werden, dann mit einer Filterflüssigkeit beschickt werden und der Filterstation (4) ein Filtrat entnommen wird.

2. Filterverfahren nach Anspruch 1, **dadurch gekennzeichnet,** daß nach Beendigung des Filtervorgangs die Filterträger (2) fit den Filtern (3) nacheinander der Filterstation (4) entnommen werden und dann die Filter (3) in einer Entsorgungsstation (5) aus den Filterträgern (2) zur Entsorgung herausgelöst und dann die Filterträger (2) nach Herauslösen der Filter (3) gereinigt werden.

3. Verfahren nach Anspruch 1 oder 2, **dadurch gekennzeichnet,** daß die Filterträger (2) nacheinander der Anschwemmstation (1) zugerührt werden.

4. Filterverfahren nach einem der Ansprüche 1 bis 3, **dadurch gekennzeichnet,** daß das Filterhilfsmittel beim Anschwemmen im Umfang qleichmäßig auf dem Filterträger (2) verteilt wird.

5. Verfahren nach einen der Ansprüche 1 bis 4, **dadurch gekennzeichnet,** daß das Filterhilfsmittel von oben angeschwemmt wird.

6. Filterverfahren nach einem der Ansprüche 1 bis 5, **dadurch gekennzeichnet,** daß das Filterhilfsmittel zentral angeschwemmt wird.

7. Filterverfahren nach einem der Ansprüche 1 - 5, **dadurch gekennzeichnet,** daß das Filterhilfsmittel radial über einen Rand des Filterträgers (3) angeschwemmt wird.

8. Filterverfahren nach einem der Ansprüche 1 bis 7, **dadurch gekennzeichnet,** daß der gesamte Verfahrensablauf automatisch gesteuert wird.

9. Filtervorrichtung zum Filtern von Flüssigkeiten, insbesondere Getränken, mit einer Filterstation, in der mehrere Filter auf Filterträgern turmartig übereinander, gegeneinander preßbar und herausnehmbar angeordnet sind und die mit einer Zuleitung für eine Filterflüssigkeit und einer Ableitung für ein Filtrat versehen ist, und mit einer Anschwemmstation,
**dadurch gekennzeichnet,** daß die Anschwemmstation (1) mit einer Anschwemmleitung (7) zum Anschwemmen eines Filterhilfsmittels auf in der Anschwemmstation (1) angeordnete Filterträger (2) vorgesehen ist, um Filter (3) auf den Filterträgern (2) zu erzeugen und daß die Filterträger in der Anschwemmstation derart ausgebildet sind, daß diese Filterträger mit den auf den Filterträgern erzeugten Filtern in der Filterstation stapelbar übereinander installierbar und gegeneinander preßbar sind.

10. Filtervorrichtung nach Anspruch 9, **dadurch gekennzeichnet,** daß eine Austrittsöffnung (8) der Anschwemmleitung (7) in der Anschwemmstation (1) oberhalb des Filterträgers (2) angeordnet ist.

11. Filtervorrichtung nach Anspruch 10, **dadurch gekennzeichnet,** daß die Austrittsöffnung (8) der Anschwemmleitung (7) in der Anschwemmstation (1) auf der Mittelachse durch den Filterträger (2) angeordnet ist.

12. Filtervorrichtung nach einem der Ansprüche 9 bis 11, **dadurch gekennzeichnet,** daß oberhalb des Filterträgers (2) und unterhalb der Austrittsöffnung (8) der Anschwemmleitung (7) ein Verteilerelement zum Verteilen des Filterhilfsmittels auf dem Filterträger (2) angeordnet ist.

13. Filtervorrichtung nach Anspruch 12, **dadurch gekennzeichnet,** daß das Verteilerelement ein nach oben gewölbtes Element umfaßt.

14. Filtervorrichtung nach Anspruch 12, **dadurch gekennzeichnet,** daß das Verteilerelement eine siebartige Platte umfaßt.

15. Filtervorrichtung nach Anspruch 9, **dadurch gekennzeichnet,** daß die Anschwemmleitung (7) Austrittsöffnungen (8) aufweist, die radial oberhalb eines Randes des Filterträgers (2) angeordnet sind.

16. Filtervorrichtung nach Anspruch 15, **dadurch gekennzeichnet,** daß die Austrittsöffnungen (8) Düsen aufweisen, über die das Filtershilfsmittel radial dem Filterträger (2) zugeführt wird.

17. Filtervorrichtung nach Anspruch 15, **dadurch** **gekennzeichnet,** daß die Austrittsöffnungen (8) Düsen aufweisen, die gegenüber dem Radius unter einem Neigungswinkel von 20° bis 70° angeordnet sind.

18. Filtervorrichtung nach Anspruch 17, **dadurch gekennzeichnet,** daß ein Teil der Düsen den Neigungswinkel mit dem Radius in Uhrzeigerrichtung, ein anderer Teil der Düsen den Neigungswinkel mit dem Radius in Gegenuhrzeigerrichtung bildet.

19. Filtervorrichtung nach einem der Ansprüche 9 bis 18, **dadurch gekennzeichnet,** daß das Filterhilfsmittel Kieselgur umfaßt.

20. Filtervorrichtung nach Anspruch 19, **dadurch gekennzeichnet,** daß das Filterhilfsmittel Wasser umfaßt.

21. Filtervorrichtung nach Anspruch 19 oder 20, **dadurch gekennzeichnet,** daß das Filterhilfsmittel Perlite umfaßt.

22. Filtervorrichtung nach einem der Ansprüche 19 bis 21, **dadurch gekennzeichnet,** daß das Filterhilfsmittel Fasern aus Kunststoff oder Cellulose umfaßt.

23. Filtervorrichtung nach einem der Ansprüche 9 bis 22, **dadurch gekennzeichnet,** daß in der Anschwemmstation (1) eine Stempelvorrichtung (9) zum Pressen des auf dem Filterträger (2) angeschwemmten Filterhilfsmittels angeordnet ist.

24. Filtervorrichtung nach einem der Ansprüche 9 bis 23, **dadurch gekennzeichnet,** daß mehrere Anschwemmstationen (1) vorgesehen sind.

25. Filtervorrichtung nach einem der Ansprüche 9 bis 24, **dadurch gekennzeichnet,** daß mehrere Filterstationen (4) vorgesehen sind.

26. Filtervorrichtung nach einem der Ansprüche 9 bis 25, **dadurch gekennzeichnet,** daß die Filterträger (2) als Metallschalen ausgebildet sind.

27. Filtervorrichtung nach einem der Ansprüche 9 bis 26, **dadurch gekennzeichnet,** daß die Filterträger (2) aus rostfreiem Stahl gefertigt sind.

28. Filtervorrichtung nach einem der Ansprüche 9 bis 27, **dadurch gekennzeichnet,** daß die Filterträger (2) einen flachen Boden aufweisen.

29. Filtervorrichtung nach einem der Ansprüche 9 bis 28, **dadurch gekennzeichnet,** daß der Boden der Filterträger (2) eine Schicht aus porösem Gewebe aufweist.

30. Filtervorrichtung nach Anspruch 29, **dadurch gekennzeichnet,** daß der Boden der Filterträger (2) mindestens eine weitere Schicht aus einem porösen Gewebe mit einer von der ersten Schicht verschiedenen Porengröße aufweist.

31. Filtervorrichtung nach einem der Ansprüche 9 - 30, **dadurch gekennzeichnet,** daß der Filterträger (2) mindestens einen Siebboden mit Längsschlitzen aufweist.

32. Filtervorrichtung nach Anspruch 31, **dadurch gekennzeichnet,** daß die Längsschlitze eine Breite von 0,01 bis 0,5 mm aufweisen.

33. Filtervorrichtung nach einem der Ansprüche 29 bis 32, **dadurch gekennzeichnet,** daß der Filterträger (2) eine rillenfeldartige Bodenwand aufweist.

34. Filtervorrichtung nach einem der Ansprüche 9 bis 33, **dadurch gekennzeichnet,** daß eine Filterträgerzuführeinrichtung vorgesehen ist, die die einzelnen Filterträger (2) nacheinander der Anschwemmstation (1) zuführt.

35. Filtervorrichtung nach einem der Ansprüche 9 bis 34, **dadurch gekennzeichnet,** daß eine Transporteinrichtung (10) zur Entnahme des Filterträgers (2) mit dem sich darauf befindenden Filter (3) aus der Anschwemmstation (1) und dessen Transport zu und Einbringen in die Filterstation (4) vorgesehen ist.

36. Filtervorrichtung nach Anspruch 35, **dadurch gekennzeichnet,** daß die Transporteinrichtung (10) einen Kran und eine Führungsschiene umfaßt.

37. Filtervorrichtung nach Anspruch 36, **dadurch gekennzeichnet,** daß der Kran (10) eine Steuerung umfaßt, mit der die Übergabe des Filterträgers (2) mit dem Filter (3) von der Anschwemmstation (1) zu der Filterstation (4) automatisch erfolgt.

38. Filtervorrichtung nach Anspruch 36 oder 37, **dadurch gekennzeichnet,** daß der Kran (10) eine verschließbare Schutzkassette zum Einschließen der Filterträger (2) mit dem Filter (3) beim Transport von der Anschwemmstation (1) zu der Filterstation (4) aufweist.

39. Filtervorrichtung nach einem der Ansprüche 9 bis 38, **dadurch gekennzeichnet,** daß die Filterträger (2) mit den Filtern (3) in der Filterstation (4) so aufeinander angeordnet sind, daß die Filterträger (2) und die Filter (3) achsensymmetrisch zu einer auf der ebenen senkrechtstehenden Achse sind.

40. Filtervorrichtung nach einem der Ansprüche 9 bis 39, **dadurch gekennzeichnet,** daß die Filterträger (2) mit den Filtern (3) in der Filterstation (4) so aufeinander angeordnet sind, daß die Filterträger (2) und die Filter (3) achsensymmetrisch zu einer zu der ebenen geneigten Achse sind.

41. Filtervorrichtung nach Anspruch 42, **dadurch gekennzeichnet,** daß die Achse um 30° gegen die Ebene geneigt ist.

42. Filtervorrichtung nach einem der Ansprüche 9 bis 41, **dadurch gekennzeichnet,** daß die Filterstation (4) so verschwenkbar ist, daß die Symmetrieachse, die durch die Filterträger (2) und die Filter (3) verläuft, veränderbar ist.

43. Filtervorrichtung nach einem der Ansprüche 9 bis 42, **dadurch gekennzeichnet,** daß zwischen den Filtern (3) und den jeweils benachbarten Filterträgern (2) die Gewebeschichten aus porösem Material angeordnet sind.

44. Filtervorrichtung nach einem der Ansprüche 9 bis 43, **dadurch gekennzeichnet,** daß in der Filterstation mehrere Schlauchleitungen zum Ableiten des Filtrats vorgesehen sind.

45. Filtervorrichtung nach einem der Ansprüche 9 bis 44, **dadurch gekennzeichnet,** daß in der Filterstation (4) eine Rückspüleinrichtung vorgesehen ist.

46. Filtervorrichtung nach einem der Ansprüche 9 bis 45, **dadurch gekennzeichnet,** daß eine Aushebeeinrichtung (12) zur Entnahme des Filterträgers (2) mit dem zugehörigen Filter (3) an der Filterstation und zu dessen Transport zu der Entsorgungsstation (5) vorgesehen ist.

47. Filtervorrichtung nach Anspruch 46, **dadurch gekennzeichnet,** daß die Aushebeeinrichtung (12) einen Aushebekran umfaßt.

48. Filtervorrichtung nach einem der Ansprüche 9 bis 47, **dadurch gekennzeichnet,** daß der Entsorgungsbehälter (6) fahrbar ist.

49. Filtervorrichtung nach einem der Ansprüche 9 bis 48, **dadurch gekennzeichnet,** daß eine Reinigungsstation zur Reinigung der Filterträger (2) nach Entnahme der Filter (3) in der Entsorgungsstation (5) vorgesehen ist.

50. Filtervorrichtung nach Anspruch 49, **dadurch gekennzeichnet,** daß eine Reinigungsfördereinrichtung zur Übergabe und zur Förderung der Filterträger durch die Reinigungsanlage nach Entnahme der Filter vorgesehen ist.

51. Filtervorrichtung nach einem der Ansprüche 34 bis 50, **dadurch gekennzeichnet,** daß die Filterträgerzuführeinrichtung sich von der Reinigungsstation bis zu der Anschwemmstation (1) erstreckt.

52. Filtervorrichtung nach einem der Ansprüche 9 bis 51, **dadurch gekennzeichnet,** daß eine übergeordnete Steuerelektronik und eine Datenverarbeitungseinheit zur automatischen Ablaufsteuerung des gesamten Verfahrensablaufs vorgesehen ist.

## Claims

1. Filter process for filtering liquids, in particular beverages, in which filters (3) are produced by depositing a filtration aid on filter substrates (2) in a deposition station (1), in which then the filters (3) with the filter substrates (2) are removed from the deposition station (1) and introduced into a filter station (4), then stacked one above the other after the fashion of a tower and pressed together, then supplied with a filter liquid, and a filtrate is removed from the filter station (4).

2. Filter process according to claim 1, characterised in that at the end of the filter process the filter substrates (2) with the filters (3) are successively removed from the filter station (4) and then the filters (3) in a disposal station (5) are released from the filter substrates (2) for disposal and then the filter substrates (2) after release of the filters (3) are cleaned.

3. Process according to claim 1 or 2, characterised in that the filter substrates (2) are successively fed to the deposition station (1).

4. Filter process according to any of claims 1 to 3, characterised in that the filtration aid during deposition is distributed on the filter substrate (2) evenly in the circumference.

5. Process according to any of claims 1 to 4, characterised in that the filtration aid is deposited from above.

6. Filter process according to any of claims 1 to 5, characterised in that the filtration aid is deposited centrally.

7. Filter process according to any of claims 1-5, characterised in that the filtration aid is deposited radially over an edge of the filter substrate (3).

8. Filter process according to any of claims 1 to 7, characterised in that the whole process cycle is controlled automatically.

9. Filter apparatus for filtering liquids, in particular beverages, with a filter station in which several filters are arranged one above the other after the fashion of a tower on filter substrates and so as to be capable of being pressed together and removed, and which is provided with an inlet pipe for a filter liquid and an outlet pipe for a filtrate, and with a deposition station, characterised in that the deposition station (1) with a deposition pipe (7) for depositing a filtration aid on filter substrates (2) arranged in the deposition station (1) is provided to produce filters (3) on the filter substrates (2) and in that the filter substrates in the deposition station are constructed in such a way that these filter substrates with the filters produced on the filter substrates can be installed in the filter station so as to be capable of being stacked one above the other, and can be pressed together.

10. Filter apparatus according to claim 9, characterised in that an outlet opening (8) of the deposition pipe (7) in the deposition station (1) is arranged above the filter substrate (2).

11. Filter apparatus according to claim 10, characterised in that the outlet opening (8) of the deposition pipe (7) in the deposition station (1) is arranged on the centre axis through the filter substrate (2).

12. Filter apparatus according to any of claims 9 to 11, characterised in that above the filter substrate (2) and below the outlet opening (8) of the deposition pipe (7) is arranged a distributor element for distributing the filtration aid on the filter substrate (2).

13. Filter apparatus according to claim 12, characterised in that the distributor element includes an upwardly arched element.

14. Filter apparatus according to claim 12, characterised in that the distributor element includes a screen-like plate.

15. Filter apparatus according to claim 9, characterised in that the deposition pipe (7) comprises outlet openings (8) which are arranged radially above an edge of the filter substrate (2).

16. Filter apparatus according to claim 15, characterised in that the outlet openings (8) comprise nozzles via which the filtration aid is fed radially to the filter substrate (2).

17. Filter apparatus according to claim 15, characterised in that the outlet openings (8) comprise nozzles which are arranged at an angle of inclination of 20° to 70° to the radius.

18. Filter apparatus according to claim 17, characterised in that some of the nozzles form the angle of inclination with the radius in a clockwise direction, others of the nozzles form the angle of inclination with the radius in an anti-clockwise direction.

19. Filter apparatus according to any of claims 9 to 18, characterised in that the filtration aid includes diatomaceous earth.

20. Filter apparatus according to claim 19, characterised in that the filtration aid includes water.

21. Filter apparatus according to claim 19 or 20, characterised in that the filtration aid includes perlites.

22. Filter apparatus according to any of claims 19 to 21, characterised in that the filtration aid includes fibres of synthetic material or cellulose.

23. Filter apparatus according to any of claims 9 to 22, characterised in that in the deposition station (1) is arranged a ram device (9) for pressing the filtration aid deposited on the filter substrate (2).

24. Filter apparatus according to any of claims 9 to 23, characterised in that several deposition stations (1) are provided.

25. Filter apparatus according to any of claims 9 to 24, characterised in that several filter stations (4) are provided.

26. Filter apparatus according to any of claims 9 to 25, characterised in that the filter substrates (2) are constructed as metal dishes.

27. Filter apparatus according to any of claims 9 to 26, characterised in that the filter substrates (2) are made of stainless steel.

28. Filter apparatus according to any of claims 9 to 27, characterised in that the filter substrates (2) comprise a flat bottom.

29. Filter apparatus according to any of claims 9 to 28, characterised in that the bottom of the filter substrates (2) comprises a layer made of porous fabric.

30. Filter apparatus according to claim 29, characterised in that the bottom of the filter substrates (2) comprises at least one further layer made of a porous fabric with a pore size different to the first layer.

31. Filter apparatus according to any of claims 9-30, characterised in that the filter substrate (2) comprises at least one screen bottom with longitudinal slots.

32. Filter apparatus according to claim 31, characterised in that the longitudinal slots have a width of 0.01 to 0.5 mm.

33. Filter apparatus according to any of claims 29 to 32, characterised in that the filter substrate (2) comprises a furrowed field-like bottom wall.

34. Filter apparatus according to any of claims 9 to 33, characterised in that a filter substrate feeder is provided, which feeds the individual filter substrates (2) successively to the deposition station (1).

35. Filter apparatus according to any of claims 9 to 34, characterised in that a transport device (10) is provided for removal of the filter substrate (2) with the filter (3) located thereon from the deposition station (1) and transport thereof to and introduction into the filter station (4).

36. Filter apparatus according to claim 35, characterised in that the transport device (10) includes a crane and a guide rail.

37. Filter apparatus according to claim 36, characterised in that the crane (10) includes a control means with which transfer of the filter substrate (2) with the filter (3) from the deposition station (1) to the filter station (4) takes place automatically.

38. Filter apparatus according to claim 36 or 37, characterised in that the crane (10) comprises a closable protective cartridge for enclosing the filter substrates (2) with the filter (3) during transport from the deposition station (1) to the filter station (4).

39. Filter apparatus according to any of claims 9 to 38, characterised in that the filter substrates (2) with the filters (3) are arranged in the filter station (4) one on top of the other in such a way that the filter substrates (2) and the filters (3) are axially symmetrical to an axis standing vertically on the level.

40. Filter apparatus according to any of claims 9 to 39, characterised in that the filter substrates (2) with the filters (3) are arranged in the filter station (4) one on top of the other in such a way that the filter substrates (2) and the filters (3) are axially symmetrical to an axis inclined at an angle to the level.

41. Filter apparatus according to claim 42, characterised in that the axis is inclined at 30° to the level.

42. Filter apparatus according to any of claims 9 to 41, characterised in that the filter station (4) is pivotable in such a way that the axis of symmetry which extends through the filter substrates (2) and the filters (3) is variable.

43. Filter apparatus according to any of claims 9 to 42, characterised in that between the filters (3) and the respectively adjacent filter substrates (2) are arranged the fabric layers made of porous material.

44. Filter apparatus according to any of claims 9 to 43, characterised in that in the filter station are provided several hose pipes for conducting away the filtrate.

45. Filter apparatus according to any of claims 9 to 44, characterised in that in the filter station (4) is provided a backflushing device.

46. Filter apparatus according to any of claims 9 to 45, characterised in that a lifting device (12) for removing the filter substrate (2) with the associated filter (3) at the filter station and transporting it to the disposal station (5) is provided.

47. Filter apparatus according to claim 46, characterised in that the lifting device (12) includes a lifting crane.

48. Filter apparatus according to any of claims 9 to 47, characterised in that the disposal tank (6) is mobile.

49. Filter apparatus according to any of claims 9 to 48, characterised in that a cleaning station is provided for cleaning the filter substrates (2) after removal of the filters (3) in the disposal station (5).

50. Filter apparatus according to claim 49, characterised in that a cleaning conveyor device is provided for transferring and conveying the filter substrates through the cleaning plant after removal of the filters.

51. Filter apparatus according to any of claims 34 to 50, characterised in that the filter substrate feeder extends from the cleaning station to the deposition station (1).

52. Filter apparatus according to any of claims 9 to 51, characterised in that an overriding electronic control system and a data processing unit are provided for automatic process control of the whole process cycle.

## Revendications

1. Procédé pour la filtration de liquides, en particulier de boissons, d'après lequel des filtres (3) sont réalisés par le dépôt d'un agent filtrant auxiliaire sur des supports de filtres (2) dans une station de dépôt (1), les filtres (3) étant ensuite retirés de la station de dépôt (1) avec les supports de filtres (2) et introduits dans une station de filtration (4) où ils sont empilés en colonne et comprimés les uns avec les autres, puis chargés d'un liquide à filtrer et un filtrat étant soutiré de la station de filtration (4).

2. Procédé de filtration selon la revendication 1, caractérisé en ce qu'après la fin du processus de filtration, les supports de filtres (2) munis des filtres (3) sont retirés successivement de la station de filtration (4), que les filtres (3) sont ensuite détachés des supports de filtres (2) dans une station d'évacuation (5) en vue de leur élimination, et que les supports de filtres (2) sont nettoyés après l'enlèvement des filtres (3).

3. Procédé selon l'une des revendications 1 ou 2, caractérisé en ce que les supports de filtres (2) sont amenés les uns après les autres à la station de dépôt (1).

4. Procédé de filtration selon l'une des revendications 1 à 3, caractérisé en ce que lors du dépôt, l'agent filtrant auxiliaire est réparti uniformément, par la périphérie, sur le support de filtre (2).

5. Procédé selon l'une des revendications 1 à 4, caractérisé en ce que l'agent filtrant auxiliaire est déposé par le haut.

6. Procédé de filtration selon l'une des revendications 1 à 5, caractérisé en ce que l'agent filtrant auxiliaire est déposé à partir du centre.

7. Procédé de filtration selon l'une des revendications 1 à 5, caractérisé en ce que l'agent filtrant auxiliaire est déposé radialement par l'un des bords du support de filtre (3).

8. Procédé de filtration selon l'une des revendications 1 à 7, caractérisé en ce que le déroulement de l'ensemble du processus est commandé automatiquement.

9. Dispositif pour la filtration de liquides, en particulier de boissons, comprenant une station de filtration dans laquelle plusieurs filtres sur des supports de filtres sont disposés en colonne les uns au-dessus des autres, peuvent être pressés les uns contre les autres et enlevés, et qui est équipée d'une conduite d'arrivée pour un liquide à filtrer et d'une conduite d'écoulement pour l'évacuation d'un filtrat, et une station de dépôt, **caractérisé en ce** que la station de dépôt (1) comprend une conduite d'amenée (7) pour le dépôt d'un agent filtrant auxiliaire sur des supports de filtres (2) placés dans la station de dépôt (1), pour produire des filtres (3) sur les supports de filtres (2), et que les supports de filtres sont conformés dans la station de dépôt de telle façon que lesdits supports de filtres avec les filtres réalisés sous ces derniers peuvent être empilés et pressés les uns contre les autres dans la station de filtration.

10. Dispositif de filtration selon la revendication 9, caractérisé en ce qu'une ouverture de sortie (8) de la conduite d'amenée (7) dans la station de dépôt (1) est disposée au-dessus du support de filtre (2).

11. Dispositif de filtration selon la revendication 10, caractérisé en ce que l'ouverture de sortie (8) de la conduite d'amenée (7) dans la station de dépôt (1) est située sur l'axe médian passant par le support de filtre (2).

12. Dispositif de filtration selon l'une des revendications 9 à 11, caractérisé en ce qu'au-dessus du support de filtre (2) et en dessous de l'ouverture de sortie (8) de la conduite d'amenée (7), est disposé un élément de distribution pour la répartition de l'agent filtrant auxiliaire sur le support de filtre (2).

13. Dispositif de filtration selon la revendication 12, caractérisé en ce que l'élément de distribution comprend un élément courbé vers le haut.

14. Dispositif de filtration selon la revendication 12, caractérisé en ce que l'élément de distribution comprend une plaque en forme de tamis.

15. Dispositif de filtration selon la revendication 9, caractérisé en ce que la conduite d'amenée (7) présente des ouvertures de sortie (8) disposées radialement au-dessus d'un bord du support de filtre (2).

16. Dispositif de filtration selon la revendication 15, caractérisé en ce que les ouvertures de sortie (8) comportent des buses par lesquelles l'agent filtrant auxiliaire est amené radialement au support de filtre (2).

17. Dispositif de filtration selon la revendication 15, caractérisé en ce que les ouvertures de sortie (8) comportent des buses orientées par rapport au rayon sous un angle d'inclinaison de 20 à 70°.

18. Dispositif de filtration selon la revendication 17, caractérisé en ce qu'une partie des buses forme l'angle d'inclinaison avec le rayon dans le sens horaire et qu'une autre partie des buses forme l'angle d'inclinaison avec le rayon dans le sens antihoraire.

19. Dispositif de filtration selon l'une des revendications 9 à 18, caractérisé en ce que l'agent filtrant auxiliaire comprend des diatomites.

20. Dispositif de filtration selon la revendication 19, caractérisé en ce que l'agent filtrant auxiliaire comprend de l'eau.

21. Dispositif de filtration selon l'une des revendications 19 ou 20, caractérisé en ce que l'agent filtrant auxiliaire comprend de la perlite.

22. Dispositif de filtration selon l'une des revendications 19 à 21, caractérisé en ce que l'agent filtrant auxiliaire comprend des fibres de matière plastique ou de cellulose.

23. Dispositif de filtration selon l'une des revendications 9 à 22, caractérisé en ce que dans la station de dépôt (1) est prévu un système de pistons (9) pour la compression de l'agent filtrant auxiliaire déposé sur le support de filtre (2).

24. Dispositif de filtration selon l'une des revendications 9 à 23, caractérisé en ce qu'il comprend plusieurs stations de dépôt (1).

25. Dispositif de filtration selon l'une des revendications 9 à 24, caractérisé en ce qu'il comprend plusieurs stations de filtration (4).

26. Dispositif de filtration selon l'une des revendications 9 à 25, caractérisé en ce que les supports de filtres (2) sont conformés en coquilles métalliques.

27. Dispositif de filtration selon l'une des revendications 9 à 26, caractérisé en ce que les supports de filtres (2) sont réalisés en acier inoxydable.

28. Dispositif de filtration selon l'une des revendications 9 à 27, caractérisé en ce que les supports de filtres (2) présentent un fond plat.

29. Dispositif de filtration selon l'une des revendications 9 à 28, caractérisé en ce que le fond des supports de filtres (2) comporte une couche de tissu poreux.

30. Dispositif de filtration selon la revendication 29, caractérisé en ce que le fond des supports de filtres (2) comporte au moins une couche supplémentaire d'un tissu poreux dont la porosité diffère de celle de la première couche.

31. Dispositif de filtration selon l'une des revendications 9 à 30, caractérisé en ce que le support de filtre (2) comprend au moins un fond en forme de tamis avec des fentes longitudinales.

32. Dispositif de filtration selon la revendication 31, caractérisé en ce que les fentes longitudinales présentent une largeur de 0,01 à 0,5 mm.

33. Dispositif de filtration selon l'une des revendications 29 à 32, caractérisé en ce que le support de filtre (2) comporte une paroi de fond conformée en zone rainurée.

34. Dispositif de filtration selon l'une des revendications 9 à 33, caractérisé en ce qu'il comprend un dispositif d'amenée de supports de filtres qui amène les supports de filtres (2) successivement à la station de dépôt (1).

35. Dispositif de filtration selon l'une des revendications 9 à 34, caractérisé en ce qu'un dispositif de transport (10) est prévu pour l'enlèvement du support de filtre (2) , avec le filtre (3) déposé sur celui-ci, de la station de dépôt (1), et pour le transport et l'introduction dudit support de filtre dans la station de filtration (4).

36. Dispositif de filtration selon la revendication 35, caractérisé en ce que le dispositif de transport (10) comprend une grue et un rail de guidage.

37. Dispositif de filtration selon la revendication 36, caractérisé en ce que la grue (10) comprend une commande qui assure un transfert automatique du support de filtre (2) avec le filtre (3), de la station de dépôt (1) à la station de filtration (4).

38. Dispositif de filtration selon l'une des revendications 36 ou 37, caractérisé en ce que la grue (10) comprend une cassette de protection obturable pour enfermer le support de filtre (2) avec le filtre (3) pendant le transport de la station de dépôt (1) jusqu'à la station de filtration (4).

39. Dispositif de filtration selon l'une des revendications 9 à 38, caractérisé en ce que les supports de filtres (2) avec les filtres (3) sont superposés dans la station de filtration (4) de telle façon que les supports de filtres (2) et les filtres (3) sont orientés symétriquement par rapport à un axe perpendiculaire au plan.

40. Dispositif de filtration selon l'une des revendications 9 à 39, caractérisé en ce que les supports de filtres (2) avec les filtres (3) sont superposés dans la station de filtration (4) de telle façon que les supports de filtres (2) et les filtres (3) sont orientés symétriquement par rapport à un axe incliné par rapport au plan.

41. Dispositif de filtration selon la revendication 42, caractérisé en ce que l'axe est incliné de 30° par rapport au plan.

42. Dispositif de filtration selon l'une des revendications 9 à 41, caractérisé en ce que la station de filtration (4) peut pivoter de telle façon que l'orientation de l'axe de symétrie passant par les supports de filtres (2) et les filtres (3) peut être modifiée.

43. Dispositif de filtration selon l'une des revendications 9 à 42, caractérisé en ce que les couches de tissu constituées de matière poreuse sont disposées entre les filtres (3) et les deux supports de filtres (2) respectivement voisins.

44. Dispositif de filtration selon l'une des revendications 9 à 43, caractérisé en ce que plusieurs tuyaux flexibles pour l'évacuation du filtrat sont prévus dans la station de filtration.

45. Dispositif de filtration selon l'une des revendications 9 à 44, caractérisé en ce que la station de filtration (4) est équipée d'un dispositif de lavage à contrecourant.

46. Dispositif de filtration selon l'une des revendications 9 à 45, caractérisé en ce qu'il comprend un dispositif d'extraction (12) pour l'enlèvement du support de filtre (2) avec le filtre (3) associé de la station de filtration et pour le transport de celui-ci vers la station d'évacuation (5).

47. Dispositif de filtration selon la revendication 46, caractérisé en ce que le dispositif d'extraction (12) comprend une grue d'extraction.

48. Dispositif de filtration selon l'une des revendications 9 à 47, caractérisé en ce que le bac d'évacuation (6) est mobile.

49. Dispositif de filtration selon l'une des revendications 9 à 48, caractérisé en ce qu'il comprend une station de nettoyage pour le nettoyage des supports de filtres (2) après l'enlèvement des filtres (3) dans la station d'évacuation (5).

50. Dispositif de filtration selon la revendication 49, caractérisé en ce qu'il comprend un système de nettoyage et de transport pour le transfert et pour le transport des supports de filtres au travers de l'installation de nettoyage, après l'enlèvement des filtres.

51. Dispositif de filtration selon l'une des revendications 34 à 50, caractérisé en ce que le dispositif d'amenée de supports de filtres s'étend de la station de nettoyage jusqu'à la station de dépôt (1).

52. Dispositif de filtration selon l'une des revendications 9 à 51, caractérisé en ce qu'il comprend une électronique de commande principale et une unité de traitement des données pour la commande du déroulement automatique de l'ensemble du processus.
